# EUROPEAN PATENT APPLICATION

(11) **EP 0 529 808 A2**
(43) Date of publication of application: **03.03.1993**
(21) Application number: 92306873.8
(22) Date of filing: 28.07.1992
(51) Int. Cl.: G06F 3/12

(54) **Print manager system for electronic job printing**

(30) Priority: 29.08.1991 US 752146
(71) Applicant: XEROX CORPORATION, Rochester New York 14644 (US)
(72) Inventor: Grow, Carolyn P., Penfield, NY 14526 (US); Basely, Jocelyn R., Rochester, NY 14608 (US); Lavallee, Pierre A., Fairport, NY 14450 (US)
(74) Representative: Goode, Ian Roy

(57) **Abstract**

A print managing system (10) for networked job processor of the type having plural PCs (14), at least one output printer (50), a print manager (25), and a network (20, 28) electronically coupling the PCs (14), printer (50), and print manager (25) together so as to enable the PCs (14) to utilize the output printer (50).

## Description

The invention relates to electronic job processing, and more particularly to a print manager system for enabling electronic job processing in a network system.

Personal computers have become commonplace on the desks of most office workers. Typically, much of the workproduct of such computers is intended to be transformed into hardcopy via a printer using digital imaging technology. A typical printer configuration for this purpose comprises a dedicated printer coupled to the personal computer. However, printers used for this purpose are typically small laser printers which have limited functions and features such as a limited tray capacity which restricts the number and types of copy sheets that can be used to make prints on, or which do not have a finishing capability, etc.

On the other hand, larger high speed laser printers normally have a great deal of finishing and copy sheet capability which would allow the PC user to have, for example, custom printing and finishing of his workproduct, an option which for many PC users would be highly desirable.

In the prior art, US-A-4,970,554 to Rourke discloses a job processing system for electronic copying/printing systems in which an electronic job ticket displayed on the screen of an input station, the job ticket providing various job program selections for entering job printing instructions. Following programming, a hard copy of the job ticket is made and assembled with the documents that comprise the job in order to access the transmitted instructions. and displaying job programming selections is used to enter job printing instructions. Further, US-A-4,852,019 to Vinberg et al discloses a system for retrieving stored graphics using a central processor to create and translate graphical information into a variety of formats which different users can access. US-A-4,754,428 to Schultz et al discloses an apparatus and method for distributing documents to remote terminals with different formats wherein a document is converted into a common format prior to transmission over a communication link. And, US-A-4,651,278 to Herzog et al discloses an interface process for an all-points addressable printer wherein a printer is connected to a host application program which can be present on a number of different computer systems, while US-A-4,649,513 to Martin et al discloses a system for processing printing data on a single printer wherein each page has a page definition (PAGEDEF) file attached to it containing the page format commands for the particular page.

In contrast, the present invention provides a print management process for controlling printing of print jobs in a network printing system having plural workstations, at least one printer, and a print manager coupling the workstations through the network to the printer, comprising the steps of: at one of the workstations, providing an electronic print file with electronic documents for a print job; generating an electronic job specification with a job ticket having program instructions for printing the print file; combining the print file and the job ticket to form an electronic job file for the print job; transmitting the job file for the print job over the network from the workstation to the print manager; at the print manager, reading the job ticket to identify program instructions for the print manager; in response to the program instructions, the print manager transmitting the job file over the network to one of the printers; at the printer, reading the job ticket to identify program instructions for printing the print file; printing the print file in accordance with the program instructions; and storing the job file at the print manager.

According to another aspect of the invention there is provided a print management process for controlling printing of print jobs in a network printing system having plural workstations, at least one printer, and a print manager coupling said workstations through said network to said printer, comprising the steps of: (a) using at least one of said workstations, generating plural discrete print files comprising a book; (b) providing document folders for individual ones of said print files having special printing instructions; (c) generating a job ticket with printing instructions for printing said book; (d) combining said print files with said document folders and said job ticket to provide a job file for said book; (e) transmitting said job file over said network to said print manager; (f) said print manager transmitting said job file to said printer for printing in accordance with printing instructions from said job ticket; (g) said printer printing said job file in accordance with printing instructions from said job ticket and said document folders; and (h) storing said job file in said memory means.

The process preferably includes the step of: accessing said job file in said memory means from one of said workstations for reprinting said job file. The process may include the step of reprinting said job file in accordance with the printing instructions in the job ticket and the document folders associated with said job file.

The process may alternatively include the step of: programming a second job ticket with different printing instructions for printing said job file; and reprinting said job file in accordance with printing instructions from said second job ticket and the printing instructions from the document folders associated with said job file. The process may alternatively include the steps of: reprogramming at least one of said job folders associated with said print files in said print job with different printing instructions; and reprinting said job file in accordance with the printing instructions from the job ticket associated with said job file and the printing instructions from said document folders.

According to another aspect of the invention there is provided a print management process for controlling printing of print jobs in a network printing system having plural workstations, at least one printer, and a print manager coupling said workstations through said network to said printer, comprising the steps of: (a) at one of said workstations, providing electronic documents in a print file for printing; (b) at said one workstation, generating an electronic job specification with a job ticket having program instructions for printing said electronic documents in said print file; (c) combining said print file and said job ticket to form an electronic job file for said print job; (d) transmitting said job file for said print job over said network from said workstation to said print manager; (e) at said print manager, reading said job ticket to identify program instructions for said print manager; (f) in response to said program instructions, said print manager said job file for said print job over said network to said one printer; (g) at said one printer, reading said job ticket to identify program instructions for printing said electronic documents in said print file; and (h) printing said electronic documents in said print file in accordance with said program instructions.

The process preferably includes the steps of: providing plural print files with electronic documents for printing in each of said print files; and generating an electronic segment specification with a document folder for at least one of said plural print files having program instructions in addition to the program instructions in said job ticket for printing the electronic documents in said one of said print file.

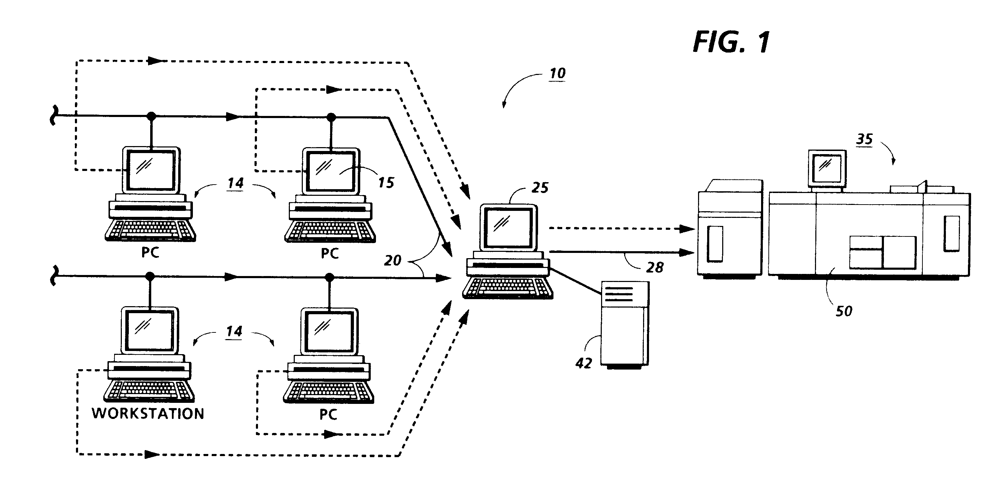

The process preferably includes the step of: storing said job file in memory; and, accessing said job file stored in said memory from one of said workstations for reprinting. The process may include the further step of reprinting said electronic documents in said print file in accordance with the program instructions of the job ticket in said said job file, or the further step of generating a new electronic job specification with job ticket having changed program instructions for reprinting said electronic documents in said print file. Figure 1 is a view illustrating the print manager system of the present invention;
Figure 2 is a view depicting a job file and the contents thereof;
Figure 3 is a block diagram showing a single segment/single PDL file;
Figure 4 is a view of an exemplary job ticket;
Figure 5 is a block diagram showing details of the print manager for the system depicted in Figure 1;
Figure 6 is a block diagram showing the job specification, segment specification, and print data file comprising a job file;
Figure 7 is a block diagram depicting job control and finishing program selections associated with the job specification;
Figure 8 is a block diagram depicting print data file type program selections associated with the print data file;
Figure 9 is a block diagram depicting media and image placement program selections associated with the segment specification;
Figure 10 is a view showing document submission, transparent printing, and demand reprint print manager client applications;
Figure 11 is a view showing remote copy and job status print manager client applications;
Figure 12 is a flow chart depicting document submission programming choices;
Figure 13 is a flow chart depicting transparent printing programming choices;
Figures 14 and 15 comprise a flow chart depicting demand reprint programming choices;
Figure 16 is a flow chart depicting remote copy programming choices;
Figure 17 is a flow chart depicting job status programming choices; and
Figure 18 is a view showing an example of job composition functionality achieved by the print management system of the present invention.

Referring to Figure 1, there is shown the print manager system, designated generally by the numeral 10, of the present invention for processing job files. System 10 includes a plurality of remote inputs such as PCs, workstations, etc. (referred to herein as workstations 14), coupled via one or more networks 20 to a print manager 25. Workstations 14 include a CRT type display screen 15 together with keyboard and mouse for entering programming instructions, image data, etc. Screen 15, which may be a touchscreen, displays various job program choices, operator instructions, messages, etc. Print manager 25 is, in turn, coupled through one or more networks 28 to one or more printing systems 35. While separate networks 20, 28 are shown, a single network may instead be used.

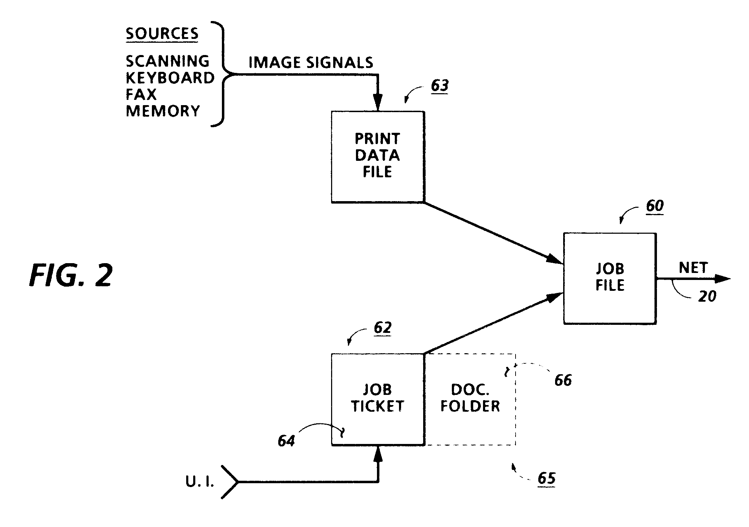

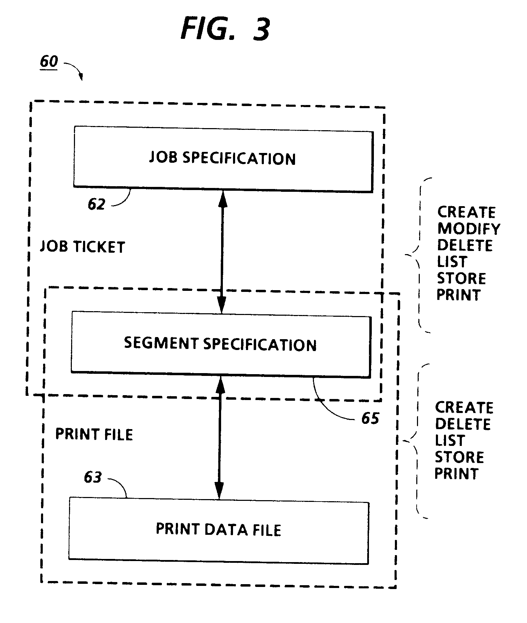

As will appear and referring particularly to Figure 2, electronic job files 60 or parts of job files 60 are created at the individual workstations 14, each job file consisting of a Job Specification 62 and Print Data file 63. Job Specification 62 is in the form of a job ticket 64 having instructions for routing, handling, and processing the job 62. Where the job has segments or sections such as chapters of a book, each with different programming requirements, job file 60 includes a Segment Specification 65 with document folder 66 having additional programming instructions for processing the segments. A job file 60 having only a Job Specification and Print Data File as shown in Figure 3 may be referred to as a single segment job.

The jobs in Print Data file 63 are electronic in form, consisting of image signals or pixels generated, for example, by scanning hard copy documents and converting the document images to image signals or pixels, directly by a keyboard, taken from memory, etc. The content of the job files are normally compressed to increase bandwidth and reduce the amount of storage required. The image signals or pixels in Print Data File 63 are arranged as electronic documents or pages for printing on a print media such as paper stock or sheets.

The programming instructions in the job ticket 64 accompanying the job file 60 may include selection of the printer in the case where plural printers are available for the client or user to choose from in printing system 35. Where a printing system 35 has printers with different features, functions, speeds, etc., it may be necessary that the client select the printer that is to be used initially so that a job ticket 64 with the program selections available with that printer may be displayed at the client's workstation 14 as described more fully in EP-A-000000, corresponding to U.S. application S.N. 07/752,155, filed 29 August, 1991, in the name of Steven V Roseklans et al entitled "Dialog Filtering" incorporated by reference herein.

During the printing process, print manager 25 transmits the printing instructions from the job ticket 64 (and document folder 66 where used) to the printing system selected.

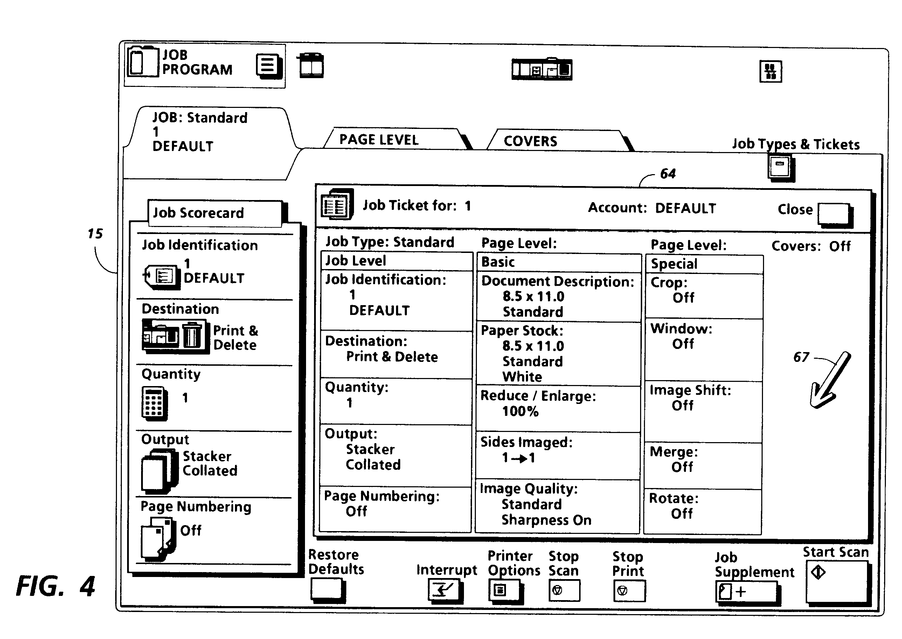

A job ticket 64 comprises a series of electronic program instructions for processing a job. Normally, job ticket 64 consists of an electronic format (an example of which is shown in Figure 4) having various programming choices displayed on screen 15 of the workstation 14 being used to create the job. The client at the workstation interactively fills out the job ticket by making selections electronically using the workstation mouse, keyboard, etc. The job ticket instructions, as will appear, encompass not only print programming instructions for the job itself but also routing and handling instructions for print manager 25. The completed job ticket 64 is combined with the job in Print Data file 63 in the job file 60.

Where the job includes segments such as chapters, different or special printing instructions may be required for individual segments. For this, the additional programming selections are provided by one or more Segment Specifications in a job folder 66. Such additional programming instructions for segments may, for example, include selection of different media for certain segments, different image placements in the segments, tabs, etc. for some or all of the segments. Folder 66 may also include instructions for combining segments such as chapters together to form finished sets or books as will appear hereinafter.

Print manager 25 comprises any suitable interface for receiving job files 60 from workstations via network 20, with the ability to access and decode the job processing instructions on the accompanying job ticket and job folder 66 where used. Print manager 25 preferably includes an on-board memory of suitable capacity for temporarily storing the job files pending processing thereof by printing system 35. The print manager on-board memory may be large enough to support long term storage of the job files or parts of the job files. Alternately, one or more remote memories 42 may be provided for this purpose.

Printing system 35 may include one or more high speed electronic printers 50 for processing jobs in accordance with the instructions input through the job ticket accompanying each job file. While a single printer 50 is shown, plural printers, either at a single central location or at several remote locations may be envisioned as well as plural printing systems 35. Printer 50, for example, may be a xerographic based printer of the type shown and described in EP-A-000000, corresponding to U.S. application S.N. 07/589,941 filed September 28, 1990, in the name of John L. Rourke et a to "Electronic Printing System for Printing Signatures" incorporated by reference herein. Other printer types such as ink jet, ionographic, LED, may be envisioned instead.

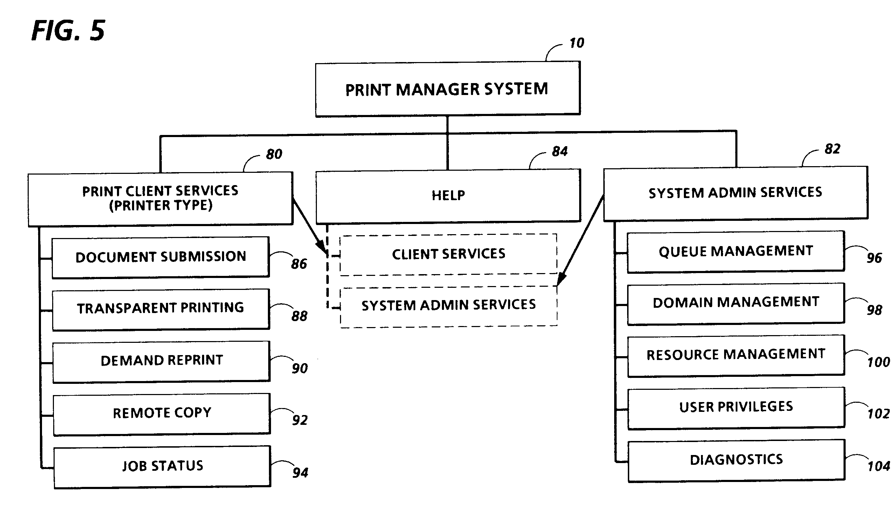

Referring now to Figure 5, print manager system 10 enables two basic services, print management by the client or user (referred to as Print Management Client Services 80) and system administration, (referred to as System Administration Services 82). A third service, Help 84, is available both with the Print Client and System Administration Services 80, 82 as well as separately.

Print Management Client Services 80 refer primarily to the management of the printing functions in response to the program instructions of the client or user from workstations 14. These comprise several management categories available for use by the client or user and include Document Submission 86, Transparent Printing 88, Demand Reprint 90, Remote Copy 92, and Job Status 94 management.

System Administration Services 82 relate to system administration of the various services offered. These are Job Queue Management 96, Customer or User Domain Management 98, Resource Management 100, and User Privileges 102 and Diagnostics 104 management. An example of System Administration Services may be found in EP-A-000000, corresponding to U.S. application S.N. 07/591,330, filed September 28, 1990 in the name of John L. Rourke, et a to "Security System for Electronic Printing Systems" incorporated by reference herein.

Other print management and system administration services may be envisioned.

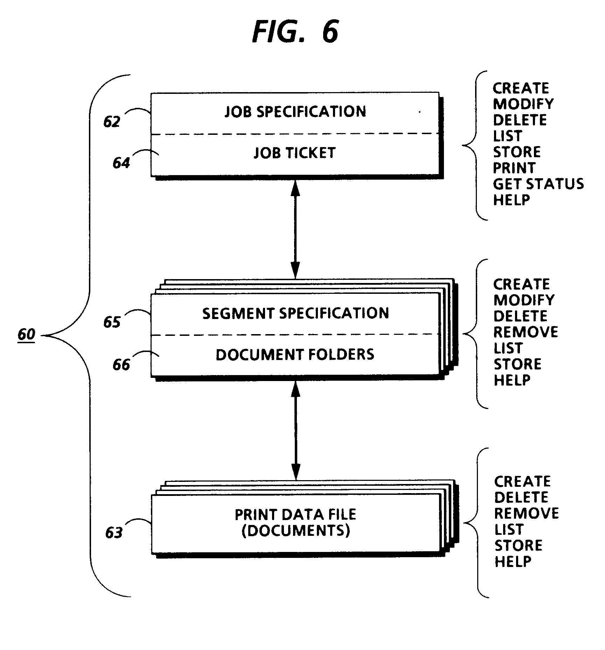

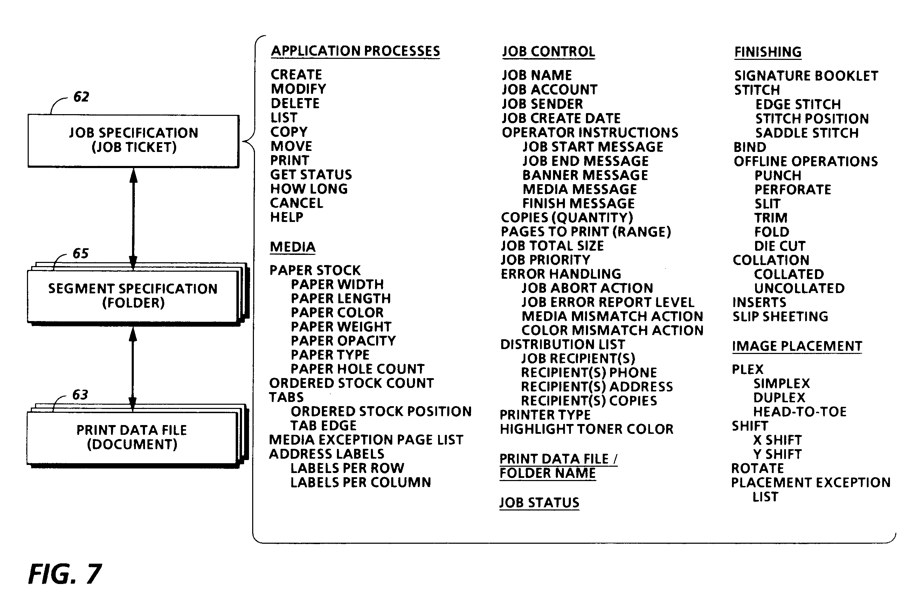

Referring to Figures 6 and 7, Job Specification 62, which is set by a job ticket 64, includes Job Control selections (such as job name, job account, etc.), Media selections (such as paper width, color, etc.), Image Placement selections (such as plex, shift etc.), and Finishing selections (such as signature booklet, stitch, bind, etc.).

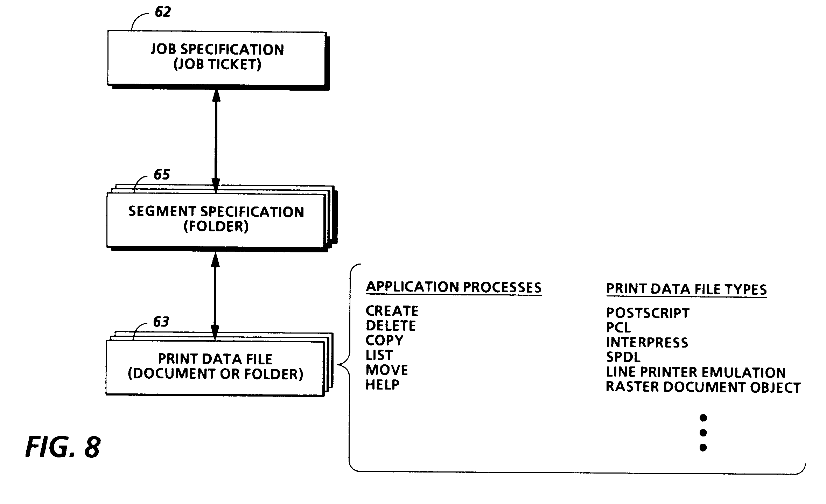

As shown in Figure 8, Print Data File 63 encompasses the client documents that comprise the job with data identifying the Page Description Language (PDL) of the job.

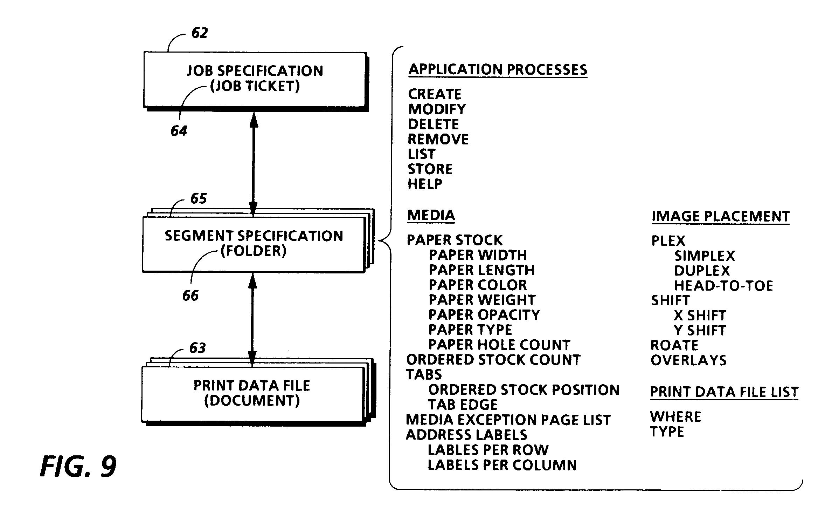

Referring to Figures 6 and 9, where the print job includes job segments, a Segment Specification 65 having additional or special Media selections (such as paper stock, tabs, etc.) and Image Placement selections (such as plex, shift, rotate, etc.) is provided. Segment Specification, which is contained in folder 66, enables programming selections on a per segment basis to accommodate the different programming requirements of the individual segments. For common selections, the program instructions of the job ticket accompanying the print file apply.

Job Specification 62 and Segment Specification 65, have certain predetermined or default selections to accommodate programming choices where no selection is made. Other and/or additional program choices may be envisioned for Job Specification 62 and Segment Specification 65.

As discussed more fully in Application S.N. 07/752,155 referred to earlier, program selections vary with the processing abilities of the printer or printers 50 in the system. For example, a printer may have only limited print processing abilities (for example, no finishing) and thus limit the programming choices offered to the customer. Where multiple printers are present in a system, some printers may have options different than that of the other printers in the system and this may require routing decisions by print manager 25. Similarly temporary operational problems may limit availability of certain programming options.

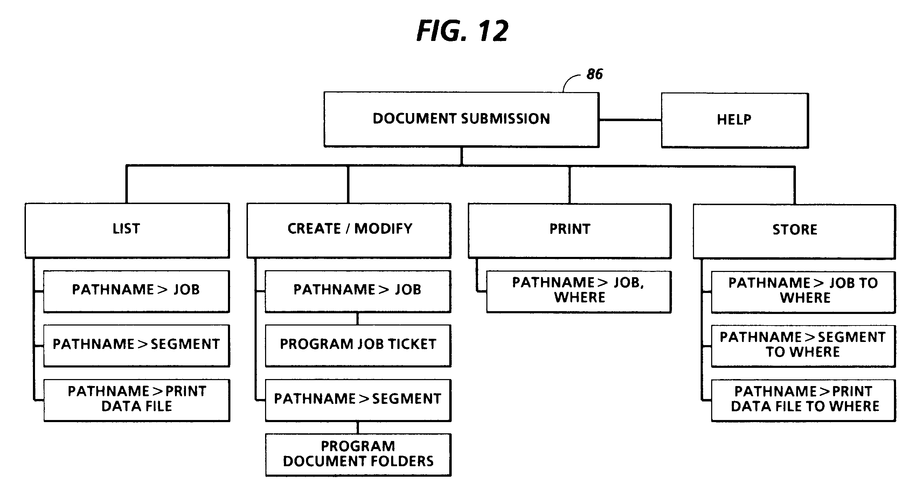

Referring to Figures 5, 10 and 12, Document Submission 86 encompasses a variety of program categories for Job Specification (Job) 62 and Print Data File (P.F.) 63 and, where the job includes segments, Segment Specification (Seg) 65. These include List, Modify, Create, Print, Store, and Help. List enables the client to display a listing of the client's print jobs that are currently in the system. The print jobs may be stored in the on-board memory of print manger 25 or in remote memory 42 where provided. Modify enables the programming selections of an existing job ticket to be changed while Create enables a new job ticket to be made up. Print enables the client to select the printer for printing the job, while Store enables the client to select the site where the job file is to be stored. Help gives the client access to sources of information designed to help the client program the job or correct system errors or malfunctions.

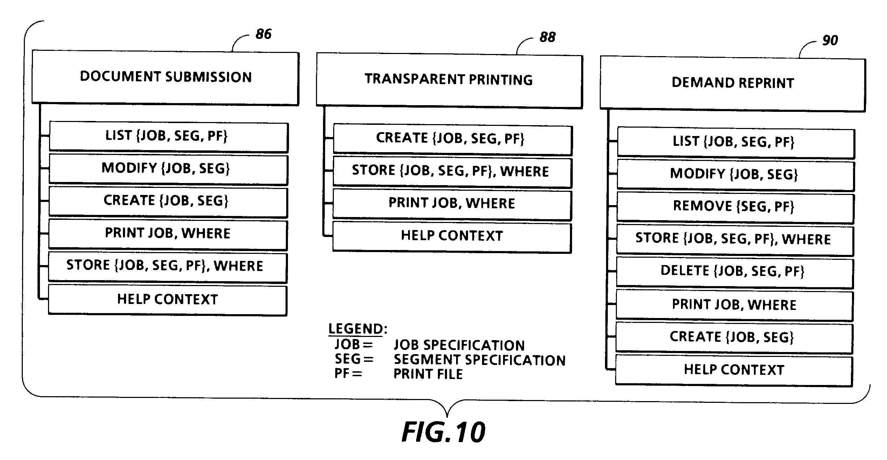

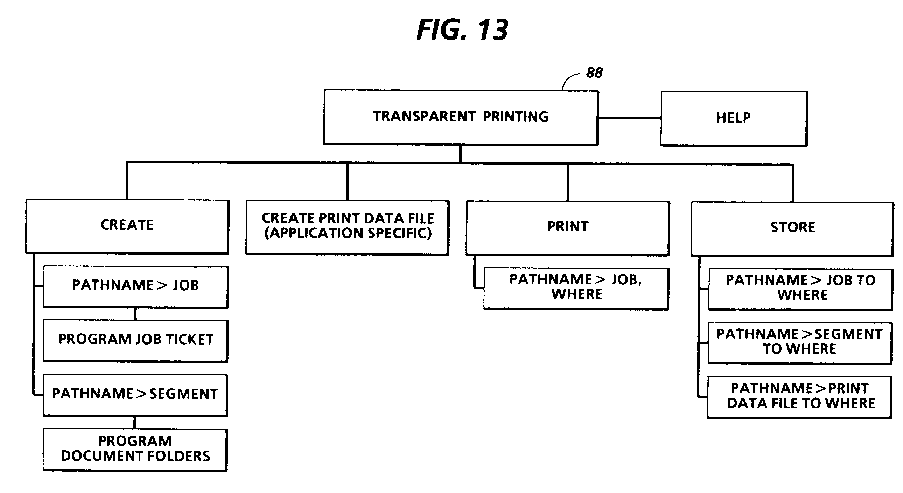

Referring to Figures 10 and 13, Transparent Printing 88 allows a client to have a job printed directly without having to go out of the application. Transparent printing provides the Create, Select, Print, Store, and Help options categories described above.

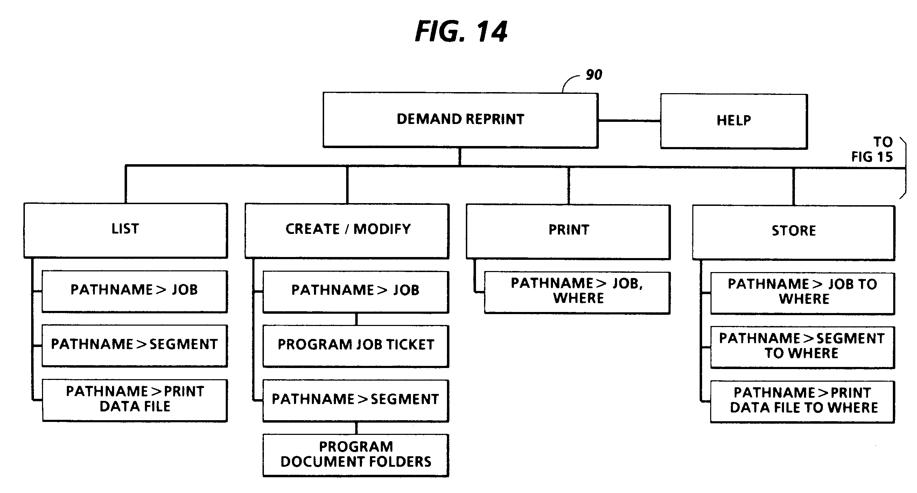

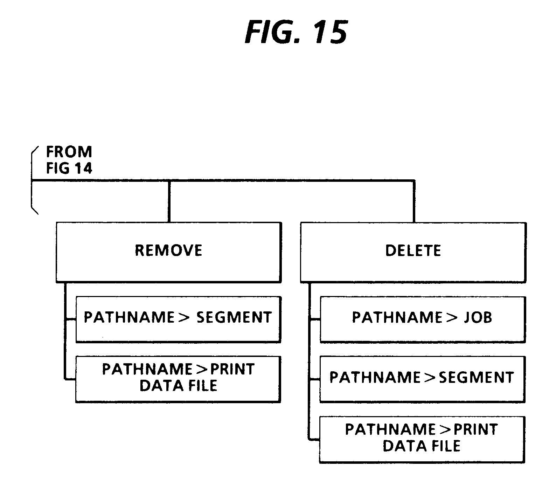

Referring to Figures 10, 14 and 15, Demand Reprint 90 enables a previously stored print job to be accessed and printed and for this provides the List, Create, Modify, Print, Store, and Help options discussed above together with Remove and Delete. Remove enables the client to remove the reprinted job from the system while Delete allows the client to delete the original job.

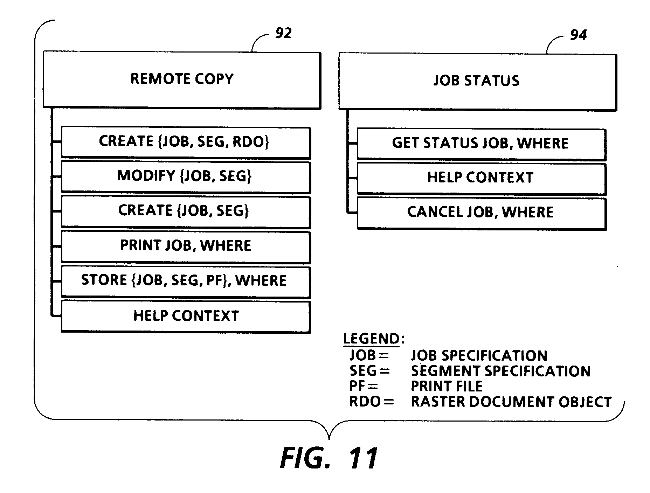

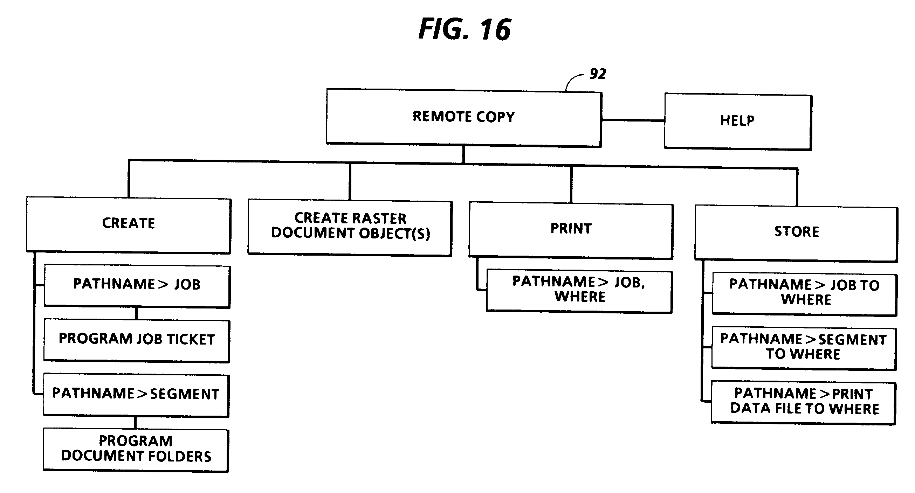

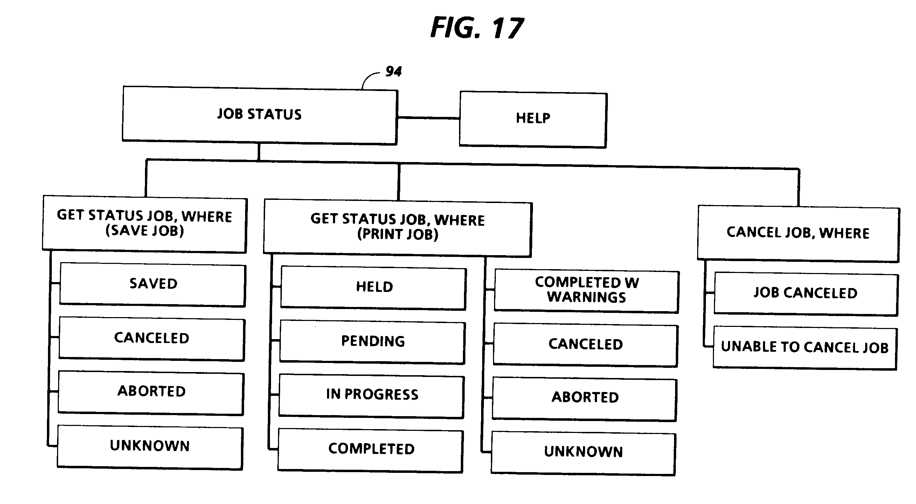

Referring to Figures 11 and 16, Remote Copy 92 provides the Create, Modify, Print, Store, and Help categories described above in a document scanner application. There, a document scanner (not shown) is used to scan the hard copy originals that comprise the print job, converting the document images to image signals or pixels for the RDO Print Data File. In Figures 11 and 17, Job Status enables a client to obtain the current status of a job that has been saved (Save Job) or that is a current print job in the system as well as enabling the job to be cancelled.

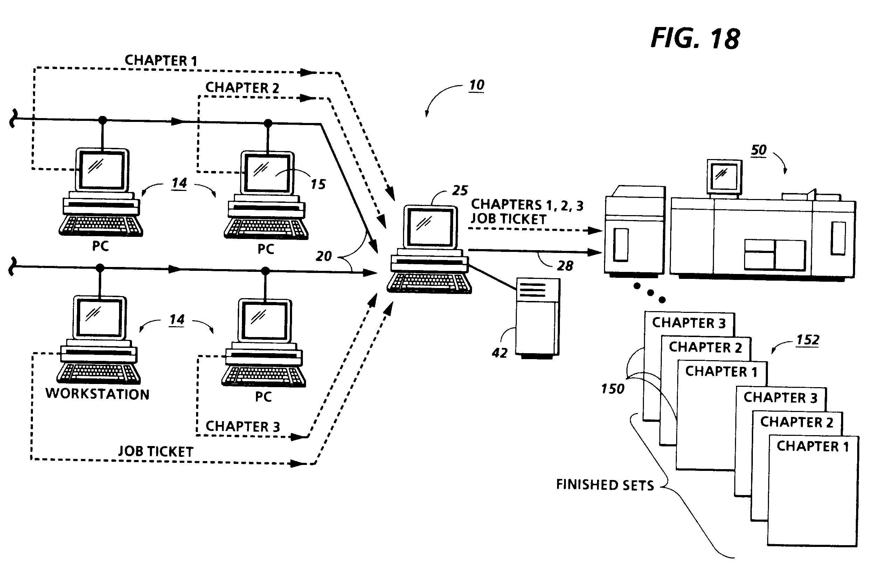

Referring now to Figure 18 where like numbers relate to like parts, print manager system 10 enables several persons at the same or different workstations 14 on network 20, 28 to have access to and provide input to the same job file. In the example shown, persons at several workstations 14 supply segments such as chapters 150 to a book 152. As the chapters are created and worked on, the chapters are stored in memory 42 of print manager 25 by the authors at a common address. When a contributor desires to print the entire book 152, the Print Data Files for the chapters of the book are accessed and a job ticket with print program instructions for the book is created by the contributor for the job file. A job folder 66 having segment specifications containing any special program instructions for the individual chapters included in the book is also provided in the job file. The ensuing job file for the book is transmitted to print manager 25 for distribution to a printer for printing.

So long as the book is stored in print manager memory 42, the book may be accessed and updates and changes to the different chapters made by the person or person having access. The revised book may then be re-printed by using a new or edited job ticket.

While multiple contributors to a job file such as book 152 has been described, it will be understood that the concept can also apply to a single individual developing or updating a job at different points in time.

While the invention has been described with reference to the structure disclosed, it is not confined to the details set forth, but is intended to cover such modifications or changes as may come within the scope of the following claims.

## Claims

1. A print management process for controlling printing of print jobs in a network (20, 28) printing system (10) having plural workstations (14), at least one printer (50), and a print manager coupling (25) said workstations (14) through said network (20, 28) to said printer (50), comprising the steps of:
a) at one of said workstations (14), providing an electronic print file (63) with electronic documents for a print job;
b) at said one workstation (14), generating an electronic job specification (62) with a job ticket (64) having program instructions for printing said print file (63);
c) combining said print file (63) and said job ticket (64) to form an electronic job file (60) for said print job;
d) transmitting said job file (60) for said print job over said network (20) from said workstation (14) to said print manager (25);
e) at said print manager (25), reading said job ticket (60) to identify program instructions for said print manager (25);
f) in response to said program instructions, said print manager (25) transmitting said job files (60) over said network (28) to said one printer (50);
g) at said one printer (50), reading said job ticket (64) to identify program instructions for printing said print file (63);
h) printing said print file (63) in accordance with said program instructions; and
i) storing said job files (60) at said print manager.

2. The print management process according to claim 1 including the steps of:
providing plural print files (63) for said print job;
generating said electronic job specification (62) with said job ticket having program instructions for printing said print files (63); and
generating an electronic segment specification (65) with a document folder (66) having additional program instructions for printing individual ones of said print files (63) that comprise said print job.

3. The print management process according to claim 1 or 2 including the steps of:
accessing said job file (60) stored at said print manager (25) from one of said workstations (14) for reprinting; and
(i) reprinting said print file (60) in accordance with the program instructions of the job ticket (64) in said job file, or (ii) generating a new electronic job specification (62) with job ticket (64) having changed program instructions for reprinting said print file (63).

4. A print management process for controlling printing of print jobs in a network printing system (10) having plural workstations (14), plural printers (50), a print manager (25) including memory means (42) for storing print jobs, and network means (20, 28) coupling said print manager (25) to said workstations (14) and said printers (50), comprising the steps of:
a) providing print files (60) with electronic pages for the print jobs to be printed at said workstations (14);
b) generating job tickets (64) at said workstations (14) having printing instructions for printing each of said print files (60) for combination with said print files (60) to provide said print jobs;
c) transmitting said print jobs over said network (20) from said workstations (14) to said print manager (25);
d) distributing said print jobs at said print manager (25) to said printers (50) for printing in accordance with the printing instructions from the job ticket (64) associated with each of said print jobs;
e) said printers (50) printing said print jobs in accordance with the instructions from the job ticket (64) associated with each of said print jobs; and
f) storing said job files (60) in said memory means (42).

5. The print management process according to claim 4 including the steps of:
accessing one of said print jobs stored in said memory means (42) from one of said workstations (14) for reprinting; and
reprinting said one print job in accordance with the program instructions in the job ticket (64) associated with said one print job.

6. The print management process according to claim 4 including the steps of:
accessing one of said print jobs stored in said memory means (42) from one of said workstations (14) for reprinting;
generating a second job ticket (64) with changed printing instructions for reprinting said one print job;
replacing the job ticket (64) associated with said one print job with said second job ticket (64); and
reprinting said one print job in accordance with the print instructions in said second job ticket (64).

7. The print management process according to claim 5 or 6 including the step of:
obtaining the status of one of said print jobs at said print manager (25).

8. The print management process according to claim 5, 6 or 7 including the step of:
selecting printers (50) for printing said print jobs in response to the printing instructions of the job ticket (64) associated with each of said print jobs.

9. In a network printing system for print jobs, the combination of:
a) at least one printer (50);
b) plural input terminals (14) for generating print jobs, said print jobs comprising plural electronic print data files (63), a job ticket (64) with program printing instructions for said print jobs by said printer (50), and a document folder (65) having special printing instructions for at least some of said print files (63);
c) a print manager (25);
d) memory means (42) for storing said print jobs; and
e) network means (20, 28) coupling said input terminals (14) to said print manager (25), said printer (50), and said memory means (42) for transfer of said print jobs to said print manager (25) and said memory means (42);
whereby on transmission of said job jobs to said print manager (25), said print manager (25) accesses said print jobs in said memory means (42) for printing of said print data files (63) by said printer (50) in accordance with the printing instructions in said job tickets (64) and said document folders (65) of each of said print jobs.

10. The network printing system according to claim 18 including an interactive screen (15) for displaying said job ticket (64) at said input terminals (14).
